# EUROPÄISCHE PATENTSCHRIFT

(11) **EP 1 013 506 B1**
(45) Veröffentlichungstag und Bekanntmachung des Hinweises auf die Patenterteilung: **11.08.2004**
(21) Anmeldenummer: 99119533.0
(22) Anmeldetag: 01.10.1999
(51) Int. Cl.: B60R 16/02

(54) **Bordnetz für ein Kraftfahrzeug**
Vehicle power supply network
Réseau de bord d'un véhicule

(30) Priorität: 21.12.1998 DE 19859036
(43) Veröffentlichungstag der Anmeldung: 28.06.2000
(73) Patentinhaber: AUDI AG, 85045 Ingolstadt (DE)
(72) Erfinder: Winkler, Josef, 85110 Kipfenberg (DE); Hafkemeyer, Marcus, 85049 Ingolstadt (DE); Wolf, Norbert, 85055 Ingolstadt (DE)

(56) Entgegenhaltungen:
- EP-A- 0 533 037
- DE-A- 19 709 298
- BONERT R ET AL: "SUPER-CAPACITORS FOR PEAK LOAD SHAVING OF BATTERIES" EPE '97. 7TH. EUROPEAN CONFERENCE ON POWER ELECTRONICS AND APPLICATIONS. TRONDHEIM, SEPT. 8 - 10, 1997, EPE. EUROPEAN CONFERENCE ON POWER ELECTRONICS AND APPLICATIONS, BRUSSELS, EPE ASSOCIATION, B, Bd. 1 CONF. 7, 8. September 1997 (1997-09-08), Seiten 1055-1060, XP000769079 ISBN: 90-75815-02-6

## Beschreibung

Die Erfindung betrifft ein Bordnetz für ein Kraftfahrzeug gemäß dem Oberbegriff des Anspruchs 1 sowie ein Verfahren zur Steuerung eines Bordnetzes für ein Kraftfahrzeug gemäß dem Oberbegriff des Anspruchs 2.

Zur Energieversorgung eines Bordnetzes für ein Kraftfahrzeug dient in der Regel ein Generator, der vom Verbrennungsmotor des Fahrzeuges angetrieben wird. Neben dem Generator als Energielieferant ist eine Bordnetzbatterie als zusätzlicher Energiespeicher notwendig. Diese Bordnetzbatterie wird hauptsächlich beim Startvorgang des Verbrennungsmotors belastet.

Bei heutigen Kraftfahrzeugen nimmt die Anzahl der elektrischen Verbraucher im Fahrzeug immer mehr zu. Neben den herkömmlichen elektrischen Verbrauchern wie z.B. Gebläse, Scheinwerfer, Radio etc. treten zukünftig TV, Fax usw., außerdem steigt auch die Anzahl der Elektronik-Komponenten (Steuergeräte) immer weiter an. Zur Aufrechterhaltung der Energieversorgung dieser Verbraucher müssen der Generator sowie die Bordnetzbatterie entsprechend ausgelegt werden. Bekannterweise ist die Leistungsabgabe des Generators abhängig von der Drehzahl des Verbrennungsmotors. Bei einer geringen Generatordrehzahl und einer Vielzahl eingeschalteter Verbraucher, reicht der Generator alleine zur Energieversorgung nicht mehr aus und die Bordnetzbatterie wird belastet und dabei entladen.

Je länger derartige ungünstige Betriebsbedingungen, geringe Generatordrehzahl sowie mehrere eingeschaltete Verbraucher, anhalten, desto stärker wird die Bordnetzbatterie entladen, was sich nachteilig u.a. auf die Lebensdauer der Bordnetzbatterie auswirkt, da die Anzahl der Lade- und Entladevorgänge (Zyklenfestigkeit) bei den bekannten Bordnetzbatterien beschränkt ist. Insbesondere im Stadtverkehr (Stop-and-Go) treten Phasen ungünstiger Betriebsbedingungen mit niedrigerer Generatordrehzahl verstärkt auf.

Im Prinzip ist es möglich den Generator so auszulegen, daß er auch bei ungünstigen Bedingungen eine ausreichende Energieversorgung gewährleistet wird. Dies würde eine unerwünschte Gewichtszunahme und eine Verteuerung des Fahrzeuges bedeuten, da beide Größen proportional zur Leistungsfähigkeit des Generators sind.

Aus der EP 0 533 037 A1, die zur Formulierung der Oberbegriffe der unabhängigen Ansprüche herangezogen wurde, ist die Verwendung eines Superkondensators in einem Bordnetz bekannt. Eine Ladung erfolgt über eine Diode aus der Fahrzeugbatterie durch Schließen eines Schalters.

Aus der DE 197 09 298 A1 ist ein Startersystem für einen Verbrennungsmotor bekannt, bei dem ein Kondensator aus der Batterie oder über den Generator des Fahrzeugs unter Verwendung eines Hochsetzstellers geladen wird.

Aufgabe der vorliegenden Erfindung ist es daher, ein gattungsgemäßes Bordnetz bzw. ein gattungsgemäßes Verfahren zur Steuerung eines Bordnetzes derart weiterzubilden, das eine Belastung der Bordnetzbatterie durch zyklisches Ent- bzw. Beladen weitgehend vermeidet.

Gelöst wird diese Aufgabe durch ein Bordnetz nach Patentanspruch 1 sowie durch ein Verfahren gemäß Patentanspruch 2.

Die wesentliche Idee der Erfindung besteht darin, ein herkömmliches Bordnetz für ein Kraftfahrzeug um einen DC/DC-Wandler mit nachgeschaltetem Superkondensator zu erweitern. Derartige Superkondensatoren sind auch als Doppelschicht-Kondensatoren (doublelayer-Kondensatoren) oder Ultrakondensatoren bekannt.

Bei dem DC/DC-Wandler handelt es sich um einen bidirektionalen, variablen Wandler, d.h., beide Ausgangsspannungen können variabel geregelt werden. Durch geeignete Wahl der Ausgangsspannungen läßt sich steuern, ob der Superkondensator geladen oder entladen wird. Die Steuerung des Wandlers übernimmt ein entsprechendes Steuergerät. Durch Ansteuerung des DC/DC-Wandlers wird der Superkondensator bevorzugt im Schubbetrieb geladen.

Bei bestimmten ungünstigen Betriebsbedingungen kann diese im Superkondensator gespeicherte Energie dann dem Bordnetz wieder zur Verfügung gestellt werden. In diesen Phasen wird somit nicht die Bordnetzbatterie entladen, sondern die benötigte Energie wird aus dem Superkondensator entnommen.

Dadurch wird die zyklische Belastung der Bordnetzbatterie erheblich verringert. Insbesondere in Schubphasen kann die Bewegungsenergie des Fahrzeugs, wie bereits erwähnt, einfach in elektrische Energie umgewandelt werden. Beim Ladevorgang des Superkondensators wird der Generator stärker belastet und dadurch erhöht sich der Widerstand an der Kurbelwelle. Somit wird die Bremswirkung des Fahrzeuges einerseits verstärkt und die Bremsenergie wirkungsvoll umgesetzt.

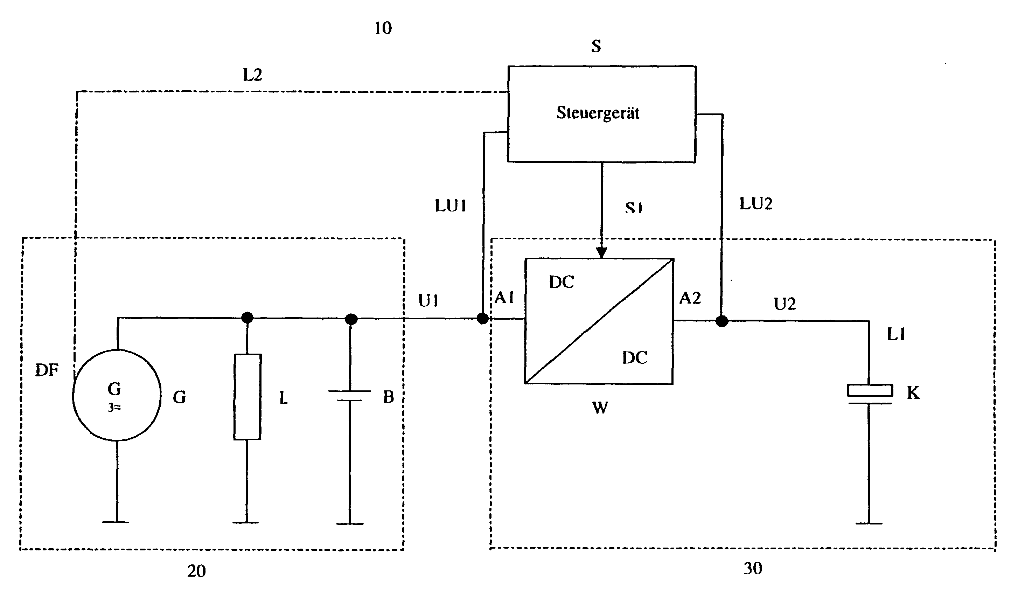

Nachfolgend ist die Erfindung anhand eines in der Zeichnung dargestellten Ausführungsbeispiels näher erläutert.

Die einzig dargestellte Figur zeigt ein Bordnetz eines Kraftfahrzeuges in schematischer Darstellung.

Das Bordnetz 10 eines nicht näher dargestellten Kraftfahrzeuges ist in ein Primärsystem 20 und ein Sekundärsystem 30 unterteilt. Das Primärsystem 20 besteht im wesentlichen aus den bekannten Komponenten eines herkömmlichen Bordnetzes. Ein vom Motor des Fahrzeuges angetriebener Generator G ist mit einer Last L und einer Bordnetzbatterie B verbunden. In der Last L sind schematisch alle Verbraucher im Fahrzeug zusammengefaßt.

Das Sekundärsystem 30 besteht im wesentlichen aus einem DC/DC-Wandler W und einem angeschlossenen Superkondensator K. Ein Ausgang A1 des DC/DC-Wandlers W ist mit den Pluspol (Klemme 30) des herkömmlichen Bordnetzes (Primärsystem 20) verbunden. Der Ausgang A2 des DC/DC-Wandlers W ist über eine Leitung L1 mit einem Pol des Superkondensators K verbunden. Der andere Pol des Superkondensators K liegt auf Masse . Beide Ausgänge des DC/DC-Wandlers A1 bzw. A2 sind jeweils über Leitungen LU1 bzw. LU2 mit einem Steuergerät S verbunden.

Das Steuergerät S ist weiterhin über eine Leitung L2 (Signal- oder Steuerleitung) mit dem Generator G verbunden. Diese Leitung ist gestrichelt eingezeichnet, da sie nicht unbedingt benötigt wird. Bei herkömmlichen Generatoren ist dies der DF-Ausgang.

Zur Ansteuerung des DC/DC-Wandlers dient eine Steuerleitung S1, die vom Steuergerät S zum DC/DC-Wandler W führt.

Nachfolgend ist die Funktionsweise der Erfindung näher beschrieben. Im Steuergerät S ist eine Unterscheidung zwischen Schub- und Zugbetrieb der Brennkraftmaschine möglich. Die hierzu notwendigen Informationsignale werden durch ein nicht dargestelltes, mit dem Steuergerät S jedoch verbundenen, Motorsteuergerät bereitgestellt. Befindet sich das Kraftfahrzeug im Schubbetrieb, so wird der DC/DC-Wandler W derart angesteuert, daß der Superkondensator K geladen wird. Hierzu wird die Ausgangsspannung U2 des DC/DC-Wandlers entsprechend eingeregelt. Ist der Superkondensator K vollständig geladen, so ist eine weitere Aufladung nicht mehr möglich.

Die im Superkondensator K gespeicherte elektrische Energie kann unabhängig vom Ladezustand des Superkondensators K durch entsprechende Steuerung der am Ausgang A1 anliegenden Spannung U1 abgegeben werden. Insbesondere in Phasen in denen der Generator G nicht die gesamte Energieversorgung des Bordnetzes bereitstellen kann, wird der DC/DC-Wandler W so vom Steuergerät S angesteuert, daß der Superkondensator K entladen wird. Dadurch wird eine Belastung der Bordnetzbatterie B weitgehend verhindert. Die Auslastung des Generators G wird im Steuergerät S über das an der Leitung L2 anliegende Signal erkannt. Ist diese Leitung L2 nicht vorhanden, so kann alternativ die Auslastung über die an der Leitung LU1 anliegende Spannung U1 ermittelt werden.

Eine weitere Situation in der das Laden des Superkondensators K von großem Vorteil ist, stellt der Betrieb der Brennkraftmaschine im Winter dar. Da bei winterlichen Bedingungen im Kaltbetrieb unmittelbar nach dem Motorstart die Ladefähigkeit der Bordbatterie B stark begrenzt wird, wird in diesem Fall vorzugsweise der Superkondensator K geladen, um die gespeicherte Energie zu einem späteren Zeitpunkt auf die nunmehr durch die Motorabwärme angewärmte Bordnetzbatterie B abzugeben. Dies erlaubt ein effizientes Laden der Bordnetzbatterie B ohne große Verluste. Der Superkondensator K dient dabei als Energie-Zwischenspeicher. Da ein Superkondensator die Energie nur ein für einen kurzen Zeitraum (Tage) speichern kann, ist das Entladen des Superkondensators K in das Primärsystem 20 oder in die Batterie B immer dann sinnvoll, wenn das Fahrzeug nach dem Motorstopp abgestellt wird.

Eine weitere Möglichkeit besteht darin, den Superkondensator K kennfeldabhängig zu laden. D.h. sobald sich die Brennkraftmaschine in einem ungünstigen Betriebszustand hinsichtlich Wirkungsgrad und Abgasverhalten befindet, wird der Superkondensator K geladen. Durch die zusätzliche Belastung der Brennkraftmaschine kann der Betriebspunkt der Brennkraftmaschine in Richtung eines verbesserten Betriebspunktes verlagert werden. Dadurch wird über das Laden des Superkondensators auch das Abgasverhalten der Brennkraftmaschine entscheidend beeinflußt. Der Ladevorgang wird hierbei wiederum vom Steuergerät S geregelt, das die entsprechenden Informationen vom Motorsteuergerät erhält.

Eine weitere Möglichkeit besteht darin, den Superkondensator dann zu laden, sobald der Generator G nicht ausgelastet ist.

In vorteilhafter Weise wird die Belastung des Verbrennungsmotors durch den Generator G in Beschleunigungsphasen des Fahrzeugs verringert, um dadurch eine bessere Fahrzeugbeschleunigung zu erhalten. Hierzu wird der DC/DC-Wandler W vom Steuergerät S so angesteuert, daß der Superkondensator K entladen wird. Je nach dem wieviel Energie im Superkondensator K gespeichert ist, kann dieser kurzfristig die gesamte Energieversorgung des Primärsystems 20 übernehmen. Dadurch wird der Generator G nicht belastet und es geht somit am Generator G keine Motorleistung verloren.

Die im Steuergerät S benötigten Informationen werden hierfür ebenfalls vom Motorsteuergerät geliefert.

In einem nicht dargestellten Ausführungsbeispiel ist ein Wechselrichter vorgesehen, der mit dem Generator G verbunden ist und es erlaubt den Generator G auch als Elektromotor zu betreiben. Die hierfür notwendigen Vorkehrungen sind dem Fachmann bekannt. Hierbei ist es möglich, die Fahrzeugleistung aufgrund der Motorleistung noch um eine Zusatzleistung durch den Betrieb des Generators G als Elektromotor zu verstärken. Die hierfür benötigte Energie wird in einfacher Weise aus dem Superkondensator K nach dem oben beschriebenen Verfahren entnommen.

Über die am Ausgang A2 anliegenden Spannung U2 wird der Ladezustand (Energieinhalt) des Superkondensators bestimmt. So kann z.B. beim Motorstart die im Superkondensator K noch gespeicherte Energie verwendet werden, um eine elektrische Katalysatorheizung zu betreiben. Dadurch wird der Aufheizvorgang des Katalysators verbessert. Die Belastung des Motors durch den Generator G wird entweder verringert oder wenn die gespeicherte Energie zusätzlich "verheizt" wird, die Anspringtemperatur (light-off) des Katalysators schneller erreicht. In beiden Fällen wirkt sich dies vorteilhaft auf die Schadstoffemission des Motors aus.

Der wesentliche Vorteil der Erfindung besteht darin, daß der Superkondensator K im Prinzip beliebige Lade- bzw. Entladezyklen durchlaufen kann und in einfacher Weise die ausreichende Energieversorgung des Primärsystems 20 gewährleisten kann.

## Patentansprüche

1. Bordnetz für ein Kraftfahrzeug, mit
einem Primärsystem (20) umfassend einen Generator (G), eine Bordnetzbatterie (B) und mindestens einen Verbraucher (L) in Parallelschaltung, und
einem Sekundärsystem (30), das zum Primärsystem (20) parallel geschaltet ist und einen Superkondensator (K) aufweist,
**dadurch gekennzeichnet,**
**dass** es weiterhin einen DC/DC-Wandler (W) aufweist, der mit dem Superkondensator (K) verbunden ist und derart ansteuerbar ist, dass der Superkondensator (K) im Schubbetrieb des Kraftfahrzeugs geladen wird.

2. Verfahren zur Steuerung eines Bordnetzes für ein Kraftfahrzeug, welches ein Primärsystem (20) mit einem Generator (G), einer Bordnetzbatterie (B) und mindestens einem Verbraucher (L) in Parallelschaltung umfaßt, sowie ein Sekundärsystem (30), das zum Primärsystem (20) parallel geschaltet ist und einen Superkondensator (K) aufweist,
**gekennzeichnet durch** folgenden Schritt:
Laden des Superkondensators (K) **durch** entsprechende Ansteuerung eines DC/DC-Wandlers (W), der mit dem Superkondensator (K) verbunden ist, im Schubbetrieb des Kraftfahrzeugs.

3. Verfahren zur Steuerung eines Bordnetzes nach Anspruch 2
**dadurch gekennzeichnet,**
**daß** der Superkondensator (K) entladen wird, sobald die Bordnetzbatterie (B) nach dem Motorstart belastet wird.

4. Verfahren zur Steuerung eines Bordnetzes nach Anspruch 2 oder 3, **dadurch gekennzeichnet,**
**daß** der Superkondensator (K) bei winterlichen Bedingungen unmittelbar nach dem Motorstart geladen wird und daß diese gespeicherte Energie zu einem späteren Zeitpunkt an die Bordnetzbatterie (B) abgegeben wird.

5. Verfahren zur Steuerung eines Bordnetzes nach einem der Ansprüche 2 bis 4,
**dadurch gekennzeichnet,**
**daß** der Superkondensator (K) nach einem Motorstop entladen wird, um die Energieversorgung nicht abgeschalteter Verbraucher (L) im Primärsystem (20) aufrechtzuerhalten.

6. Verfahren zur Steuerung eines Bordnetzes nach einem der Ansprüche 2 bis 5,
**dadurch gekennzeichnet,**
**daß** der Superkondensator (K) kennfeldabhängig geladen wird, derart, dass durch die zusätzliche Belastung ein günstigerer Betriebspunkt des Verbrennungsmotors des Kraftfahrzeugs erreicht wird.

7. Verfahren zur Steuerung eines Bordnetzes nach einem der Ansprüche 2 bis 6,
**dadurch gekennzeichnet,**
**daß** der Superkondensator (K) in Beschleunigungsphasen des Fahrzeuges entladen wird, derart, dass dadurch die Belastung des Verbrennungsmotors durch den Generator (G) verringert wird.

8. Verfahren zur Steuerung eines Bordnetzes nach einem der Ansprüche 2 bis 7,
**dadurch gekennzeichnet,**
**daß** ein Wechselrichter im Primärsystem (20) vorgesehen ist, der mit dem Generator (G) verbunden ist und derart mit ihm zusammenwirkt, dass in Beschleunigungsphasen des Fahrzeugs der Generator (G) als Elektromotor betrieben wird, um die Fahrzeugleistung zu erhöhen.

9. Verfahren zur Steuerung eines Bordnetzes nach einem der Ansprüche 2 bis 8,
**dadurch gekennzeichnet,**
**daß** der Superkondensator (K) während der Startphase des Verbrennungsmotors entladen wird, um einen elektrischen Katalysator aufzuheizen.

## Claims

1. On-board power supply system for a motor vehicle, with
a primary system (20) comprising a generator (G), a vehicle battery (B) and at least one load (L) connected in parallel, and
a secondary system (30) which is connected in parallel with the primary system (20) and has a supercapacitor (K),
**characterized in that**
it also has a DC/DC converter (W) which is connected to the supercapacitor (K) and is selectable so that the supercapacitor (K) is charged when the motor vehicle is decelerating.

2. Method for controlling an on-board power supply system for a motor vehicle which comprises a primary system (20) with a generator (G), a vehicle battery (B) and at least one load (L) connected in parallel, and also a secondary system (30) which is connected in parallel with the primary system (20) and has a supercapacitor (K),
**characterized by** the following step:
charging of the supercapacitor (K) by corresponding selection of a DC/DC converter (W) connected to the supercapacitor (K), when the motor vehicle is decelerating.

3. Method for controlling an on-board power supply system according to Claim 2
**characterized in that**
the supercapacitor (K) is discharged as soon as the vehicle battery (B) is loaded after engine start.

4. Method for controlling an on-board power supply system according to Claim 2 or Claim 3,
**characterized in that**
in winter conditions the supercapacitor (K) is charged immediately after engine start, and **in that** this stored power is supplied to the vehicle battery (B) at a later time.

5. Method for controlling an on-board power supply system according to any one of Claims 2 to 4,
**characterized in that**
the supercapacitor (K) is discharged after an engine stop in order to maintain power supply to loads (L) in the primary system (20) that remain switched on.

6. Method for controlling an on-board power supply system according to any one of Claims 2 to 5,
**characterized in that**
the charging of the supercapacitor (K) is map-controlled so that a more favourable operating point of the IC engine of the motor vehicle is attained as a result of the additional loading.

7. Method for controlling an on-board power supply system according to any one of Claims 2 to 6,
**characterized in that**
the supercapacitor (K) is discharged in acceleration phases of the vehicle so that the loading of the IC engine by the generator (G) is reduced.

8. Method for controlling an on-board power supply system according to any one of Claims 2 to 7,
**characterized in that**
a DC/AC inverter is provided in the primary system (20) and is connected to the generator (G) and cooperates therewith so that in acceleration phases of the vehicle the generator (G) operates as an electric motor to boost the performance of the vehicle.

9. Method for controlling an on-board power supply system according to any one of Claims 2 to 8,
**characterized in that**
the supercapacitor (K) is discharged during the starting phase of the IC engine in order to heat up an electrical catalytic converter.

## Revendications

1. Réseau de bord pour un véhicule automobile, comprenant
un système primaire (20) comprenant un générateur (G), une batterie de réseau de bord (B) est au moins un consommateur (L), branchés en parallèle, et
un système secondaire (30), branché en parallèle par rapport au système primaire (20) et présentant un super-condensateur (K),
**caractérisé en ce qu'**
il présente en outre un convertisseur CC/CC (W), relié au super-condensateur (K) et pouvant être commandé de manière que le super-condensateur (K) soit chargé pendant que le véhicule automobile roule sur sa lancée.

2. Procédé de commande d'un réseau de bord pour un véhicule automobile, comprenant un système primaire (20) avec un générateur (G), une batterie de réseau de bord (B) et au moins un consommateur (L), branchés en parallèle, ainsi qu'un système secondaire (30), branché en parallèle du système primaire (20) et présentant un super-condensateur (K)
**caractérisé par** l'étape suivante :
le chargement du super-condensateur (K), par une commande correspondante d'un convertisseur CC/CC (W), relié au super-condensateur (K) lorsque le véhicule automobile roule sur sa lancée.

3. Procédé de commande d'un réseau de bord selon la revendication 2, **caractérisé en ce que** le super-condensateur (K) est déchargé dès que la batterie de réseau de bord (B) est sollicitée, après le démarrage du moteur.

4. Procédé de commande d'un réseau de bord selon la revendication 2 ou la revendication 3, **caractérisé en ce que** le super-condensateur (K), dans des conditions hivernales, est chargé directement après le démarrage du moteur, et **en ce que** cette énergie accumulée est délivrée à un moment ultérieur, à la batterie de réseau de bord (B).

5. Procédé de commande d'un réseau de bord selon l'une des revendications 2 à 4, **caractérisé en ce que** le super-condensateur (K) est déchargé après un arrêt du moteur, pour conserver dans le système primaire (20) l'alimentation en énergie de consommateurs (L) n'ayant pas été coupés.

6. Procédé de commande d'un réseau de bord selon l'une des revendications 2 à 5, **caractérisé en ce que** le super-condensateur (K) est chargé selon un champ de caractéristiques, de manière que, de par une sollicitation supplémentaire, on atteigne un point de fonctionnement plus avantageux du moteur à combustion du véhicule automobile.

7. Procédé de commande d'un réseau de bord selon l'une des revendications 2 à 6, **caractérisé en ce que** le super-condensateur (K) est déchargé, lors des phases d'accélération du véhicule, de manière qu'on diminue de ce fait la sollicitation du moteur à combustion par le générateur (G).

8. Procédé de commande d'un réseau de bord selon l'une des revendications 2 à 7, **caractérisé en ce qu'**un convertisseur continu-altematif est prévu dans le système primaire (20), relié au générateur (G) et coopérant avec lui, de manière que, lors des phases d'accélération du véhicule, le générateur (G) soit exploité en moteur électrique, pour augmenter les performances du véhicule.

9. Procédé de commande d'un réseau de bord selon l'une des revendications 2 à 8, **caractérisé en ce que** le super-condensateur (K) est déchargé pendant la phase de début de fonctionnement du moteur à combustion, afin de chauffer un catalyseur électrique.
